# FASCICULE DE BREVET EUROPEEN

(11) **EP 3 625 107 B1**
(45) Date de publication et mention de la délivrance du brevet: **16.12.2020**
(21) Numéro de dépôt: 18727746.2
(22) Date de dépôt: 18.05.2018
(51) Int. Cl.: B62B 3/00, B62B 5/00

(54) **VOLET ANTICHUTE POUR MODULE LOGISTIQUE**
ANTIFALL-JALOUSIE FÜR LOGISTIKMODUL
ANTIFALL GUARD FOR A LOGISTICS MODULE

(30) Priorité: 18.05.2017 FR 1754427
(43) Date de publication de la demande: 25.03.2020
(73) Titulaire: Ythales Invest, 37520 La Riche (FR)
(72) Inventeur: CHERBONNIER, Yves, 37000 Tours (FR)
(74) Mandataire: den Braber, Gérard Paul
(86) Numéro de dépôt international: PCT/EP2018/063243
(87) Numéro de publication internationale: WO 2018/211134

(56) Documents cités:
- EP-A1- 1 428 763
- DE-U1-202015 101 362
- FR-A3- 3 012 402
- US-A- 2 455 237

## Description

### DOMAINE TECHNIQUE

L'invention concerne un volet antichute pour un module logistique. Le module logistique roulant peut être sous forme, par exemple, d'un roll conteneur dans lequel des objets peuvent être chargés, notamment des marchandises. Ce type de module logistique peut être utilisé, par exemple, pour transporter des marchandises vers des magasins afin de les approvisionner et pour stocker et transporter au sein d'un magasin des marchandises destinées à être mises dans des rayons de vente.

### ETAT DE LA TECHNIQUE ANTERIEURE

La publication brevet EP1428763 décrit un chariot de stockage de marchandises comprenant une embase et deux ridelles verticales montées sur celle-ci. Le chariot est muni d'un volet antichute pour recouvrir un côté du chariot défini entre ces deux ridelles. Le volet antichute est formé d'une feuille souple munie de moyens de fixation. Ces moyens de fixations permettent de fixer le volet antichute sur un montant d'une des deux ridelles et de façon amovible sur un montant de l'autre des deux ridelles, qui se trouve à l'opposé. Les moyens de fixations peuvent être liés à la feuille souple au moyen d'une ou plusieurs sangles qui sont horizontalement fixées à la feuille souple.

Une sangle peut comprendre un tronçon à caractéristique élastique contrôlée. Ce tronçon peut être formé en un matériau élastique intercalé en série entre deux brins de la sangle ou en variante, le tronçon élastique peut être réalisé par un surpiquage approprié à l'aide d'un fil élastique, ou d'un tronçon élastique en parallèle d'un tronçon non élastique de la sangle, de plus grande longueur que ledit tronçon élastique.

### EXPOSE DE L'INVENTION

Il existe un besoin pour des solutions alternatives permettant d'accrocher un volet antichute à une ridelle de façon amovible au moyen d'une bande élastique.

Selon l'invention, un volet antichute pour un module logistique comprend :
- une feuille souple;
- un dispositif de crochet,
- une bande élastique par l'intermédiaire de laquelle le dispositif de crochet est relié à la feuille souple, et
- un élément d'arrêt fixé sur la feuille souple, un élément du dispositif de crochet venant en butée contre élément d'arrêt lorsque la bande élastique est éti rée.

A des fins d'illustration, quelques modes de réalisation de l'invention sont décrits en détail en référence aux dessins annexés. Cette description fera apparaître des caractéristiques complémentaires à celles mentionnées dans ce qui précède, ainsi que des avantages que ces caractéristiques complémentaires peuvent apporter.

### DESCRIPTION SOMMAIRE DES DESSINS

- La figure 1 est une vue schématique de dessus d'un premier mode de réalisation d'un volet antichute dans un état lâche.
- La figure 2 est une vue schématique en perspective avant d'une partie supérieure droite du premier mode de réalisation dans l'état lâche.
- La figure 3 est une vue schématique de dessus du premier mode de réalisation dans un état tendu.
- La figure 4 est une vue schématique en perspective avant de la partie supérieure droite du premier mode de réalisation dans l'état tendu.
- La figure 5 est une vue schématique en perspective avant d'une partie supérieure droite d'un roll conteneur comprenant un volet antichute conforme au premier mode de réalisation dans l'état lâche, avant d'être accroché à un montant du roll conteneur.
- La figure 6 est une vue schématique en perspective avant de la partie supérieure droite du roll conteneur comprenant le volet antichute conforme au premier mode de réalisation dans l'état tendu, après avoir été accroché au montant du roll conteneur.
- La figure 7 est une vue schématique de dessus d'un second mode de réalisation d'un volet antichute dans un état moyennement tendu.
- La figure 8 est une vue schématique en perspective avant du second mode de réalisation dans l'état moyennement tendu.
- La figure 9 est une vue schématique en perspective avant d'une partie supérieure droite du second mode de réalisation dans l'état moyennement tendu.
- La figure 10 est une vue schématique de dessus du second mode de réalisation dans un état fortement tendu.
- La figure 11 est une vue schématique en perspective avant d'une partie supérieure droite du second mode de réalisation dans l'état fortement tendu.
- La figure 12 est une vue schématique en perspective avant d'une partie supérieure droite d'un roll conteneur comprenant un volet antichute conforme au second mode de réalisation dans l'état fortement tendu, avant d'être accroché un montant du roll conteneur.
- La figure 13 est une vue schématique en perspective avant de la partie supérieure droite du roll conteneur comprenant le volet antichute conforme au second mode de réalisation dans l'état moyennement tendu, après avoir été accroché au montant du roll conteneur.
- La figure 14 est une vue schématique de dessus d'un troisième mode de réalisation d'un volet antichute dans un état lâche et non bridé.
- La figure 15 est une vue schématique de dessus du troisième mode de réalisation dans un état lâche et bridé.
- La figure 16 est une vue schématique de dessus du troisième mode de réalisation dans un état tendu et bridé.

### DESCRIPTION DE QUELQUES MODES DE REALISATION

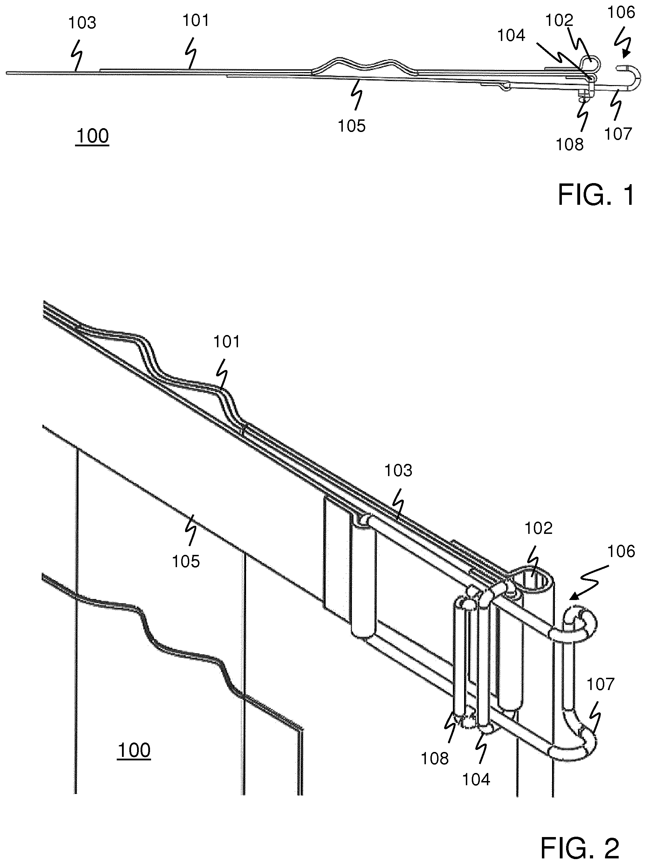

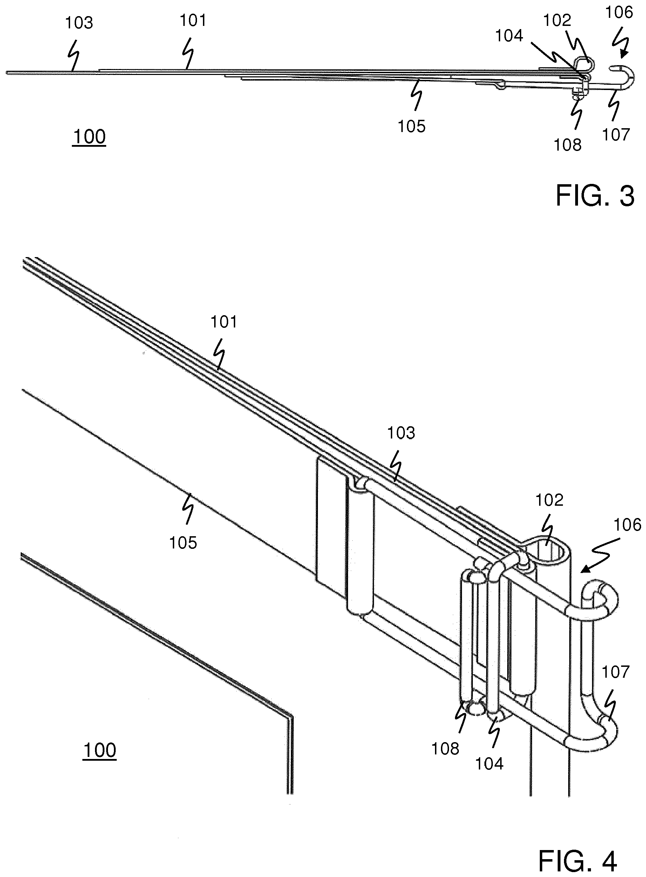

Les figures 1, 2, 3 et 4 illustrent schématiquement un premier mode de réalisation 100 d'un volet antichute pour module logistique. Les figures 1 et 3 présentent une vue schématique de dessus du premier mode de réalisation 100. Les figures 2 et 4 présentent une vue en perspective avant d'une partie supérieure droite du premier mode de réalisation 100.

Le premier mode de réalisation 100 comprend une feuille souple 101 qui constitue une partie principale du volet antichute, similaire au volet antichute décrit dans la publication brevet EP1428763. La feuille souple 101 peut être, par exemple, en polypropylène.

Une zone de bordure droite de la feuille souple 101 forme une gaine 102. La gaine 102 est formée en tournant un bord droit de la feuille souple 101 à l'état brut vers l'intérieur de la feuille souple 101 et en fixant le bord droit à la feuille souple 101 même, par exemple, par couture. La gaine 102 peut recevoir une baguette afin, par exemple, d'empêcher un affalement du volet antichute sur son bord droit.

Le premier mode de réalisation 100 comprend une bande 103 fixée horizontalement sur la feuille souple 101. Cette bande 103 peut s'apparenter à une sangle et constituer un élément de renfort du volet antichute. La bande 103 sera désignée bande de renfort 103 dans ce qui suit pour des raisons de convenance. La bande de renfort 103 peut-être, par exemple, en tissu de polypropylène. La bande de renfort 103 peut être fixée à la feuille souple 101, par exemple, par couture.

Le premier mode de réalisation 100 comprend un anneau de rétention 104. Un bout de la bande de renfort 103, se situant à droit, forme une boucle de fixation au moyen de laquelle l'anneau de rétention 104 est fixé au volet antichute. Cette boucle de fixation est formée en tournant une extrémité de la bande de renfort 103 à l'état brut vers la bande de renfort 103 même et en fixant cette extrémité à la bande de renfort 103, par exemple, par couture.

Le premier mode de réalisation 100 comprend en outre une bande élastique 105 et un dispositif de crochet 106. Le dispositif de crochet 106 est fixé à une extrémité libre de la bande élastique 105. Dans ce mode de réalisation, l'extrémité libre forme une boucle autour d'un segment transversal du dispositif de crochet 106. Une autre extrémité de la bande élastique 105 est fixée à la bande de renfort 103, par exemple, par couture. La bande élastique 105 peut être, par exemple, en caoutchouc ou toute autre matière ayant une certaine élasticité.

Le dispositif de crochet 106 comprend un crochet principal 107 et un crochet subsidiaire 108. Le crochet principal 107 se situe sur une extrémité libre du dispositif de crochet 106. Le crochet principal 107 est tourné vers la feuille souple 101 qui constitue la partie principale du volet antichute. Le crochet subsidiaire 108 se situe sur une section médiane du dispositif de crochet 106. Le crochet subsidiaire 108 est tourné à l'opposé de la feuille souple 101.

L'anneau de rétention 104 entoure et retient le dispositif de crochet 106. Le crochet subsidiaire 108 peut venir en butée contre l'anneau de rétention 104. Cela est illustré aux figures 1 à 4.

Les figures 1 et 2 illustrent le premier mode de réalisation 100 du volet antichute dans un état lâche. Dans cet état, aucune force de traction n'est exercée sur le dispositif de crochet 106. Le volet antichute peut ainsi présenter des rides comme l'illustre les figures 1 et 2. Dans cette illustration, les rides confèrent une forme de « M » à une section verticale médiane du volet antichute.

Les figures 3 et 4 illustrent le premier mode de réalisation 100 du volet antichute dans un état tendu. Dans cet état, une force de traction est exercée sur le dispositif de crochet 106. Le crochet subsidiaire 108 du dispositif de crochet 106 est en butée contre l'anneau de rétention 104 du volet antichute. La force de traction est transmise à la bande de renfort 103 par l'intermédiaire du crochet subsidiaire 108 et l'anneau de rétention 104. La force de traction est ainsi aussi transmise à la feuille souple 101 sur laquelle la bande de renfort 103 est fixée.

Dans l'état tendu, le volet antichute est lisse. Les rides ont disparues. La feuille souple 101 est tendue grâce à la force de traction exercée sur le dispositif de crochet 106.

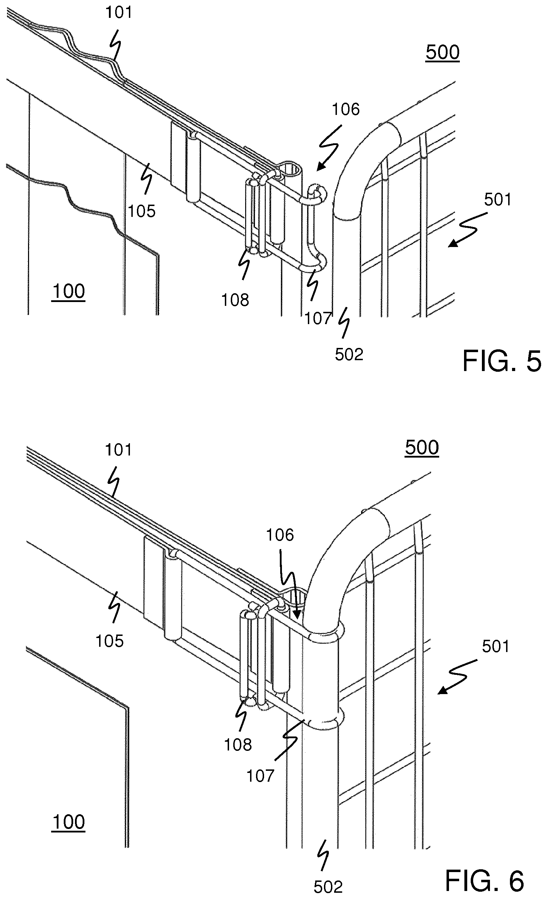

. Les figures 5 et 6 illustrent schématiquement une partie supérieure droite d'un roll conteneur 500 comprenant un volet antichute conforme au premier mode de réalisation 100. Les figures 5 et 6 présentent une vue schématique en perspective avant de la partie supérieure droite du roll conteneur 500. Le roll conteneur 500 comprend une ridelle 501 ayant un montant 502. La ridelle 501 et le montant 502 sont partiellement visibles aux figures 5 et 6.

La figure 5 illustre une situation dans laquelle le volet antichute est dans l'état lâche, avant d'être accroché au montant 502 de la ridelle 501 du roll conteneur 500. Pour accrocher le volet antichute au montant 502, un opérateur peut tirer sur le dispositif de crochet 106 jusqu'à ce que le crochet principal 107 dépasse le montant 502. La bande élastique 105 s'étire et sera tendue. La feuille souple 101, qui constitue la partie principale du volet antichute, sera aussi tendue. Ensuite, l'opérateur positionne le crochet principal 107 en face du montant 502 et peut ensuite lâcher le dispositif de crochet 106. Le crochet principal 107 s'engage avec le montant 502. Le crochet subsidiaire 108 peut faciliter ces opérations : il peut servir comme un élément de préhension.

La figure 6 illustre une situation dans laquelle le volet antichute est dans l'état tendu, après avoir été accroché au montant 502 de la ridelle 501 du roll conteneur 500. La bande élastique 105 reste étirée et tendue. Une force de tension est ainsi exercée sur la feuille souple 101.

Le crochet subsidiaire 108 peut servir pour accrocher le volet antichute à une ridelle opposée à la ridelle 501 visible aux figures 5 et 6. Cette autre ridelle n'est pas visible aux figures 5 et 6. Le volet antichute peut pivoter autour d'un montant de cette autre ridelle et ainsi être plaqué contre cette autre ridelle. Le crochet subsidiaire 108 peut donc servir pour maintenir le volet antichute plaqué contre l'autre ridelle.

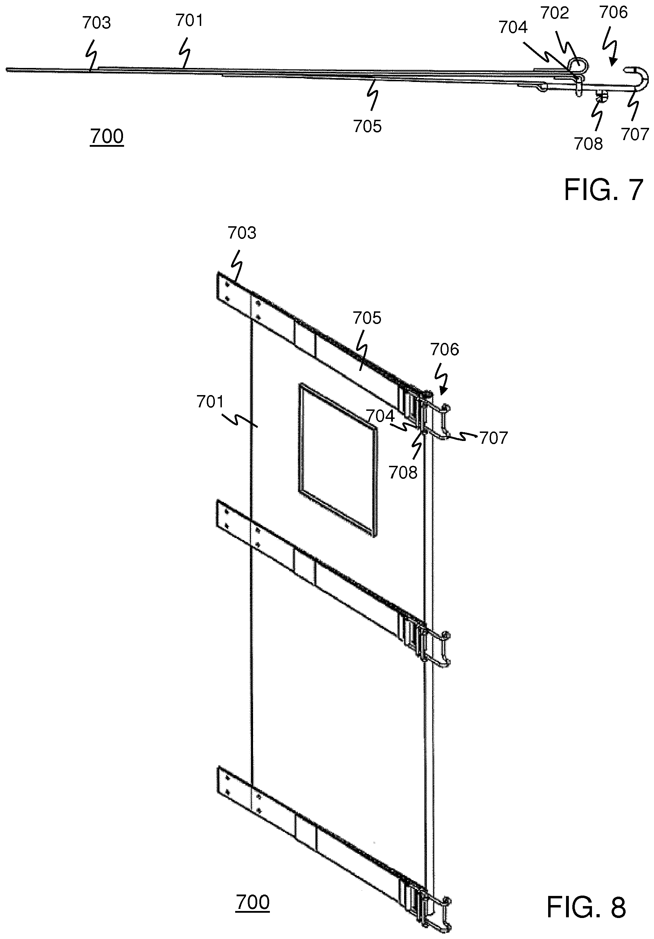

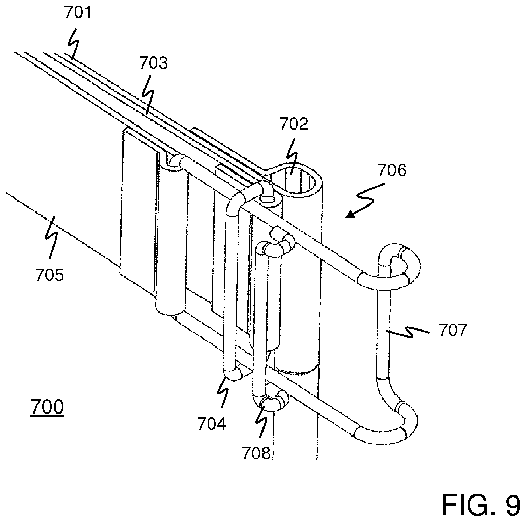

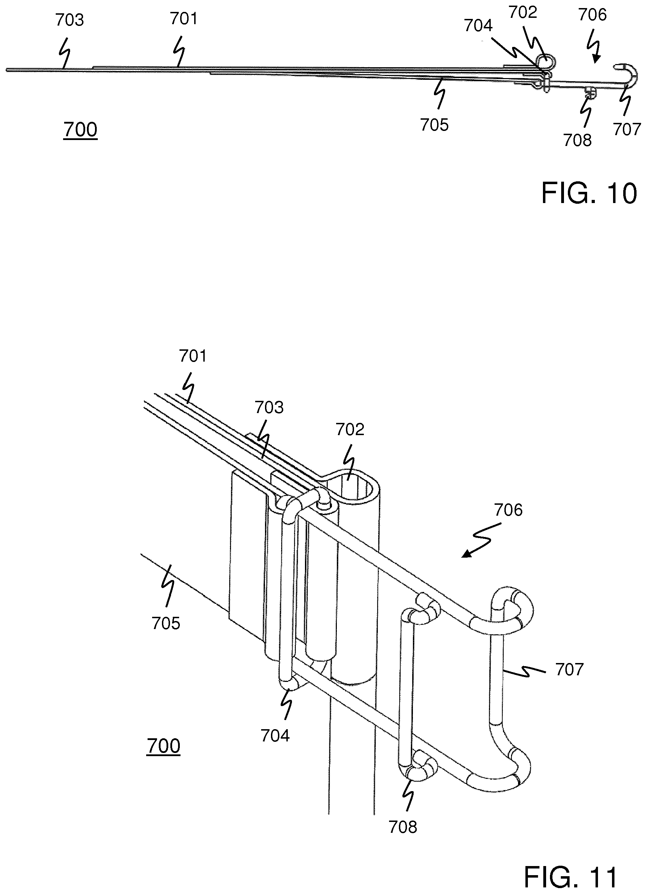

Les figures 7, 8, 9, 10 et 11 illustrent schématiquement un second mode de réalisation 700 d'un volet antichute pour module logistique. Les figures 7 et 10 présentent une vue schématique de dessus du second mode de réalisation 700. La figure 8 présente une vue en perspective avant du second mode de réalisation 700. Les figures 9 et 11 présentent une vue en perspective avant d'une partie supérieure droite du second mode de réalisation 700.

Le second mode de réalisation 700 est à plusieurs égards similaire au premier mode de réalisation 100 décrit dans ce qui précède en référence aux figures 1 à 4. Le second mode de réalisation 700 comprend également une feuille souple 701, une gaine 702, une bande de renfort 703, un anneau de rétention 704, une bande élastique 705, et un dispositif de crochet 706 comprenant un crochet principal 707 et un crochet subsidiaire 708.

.Le second mode de réalisation 700 diffère du premier mode de réalisation 100 sur l'aspect suivant. Dans le premier mode de réalisation 100 illustré aux figures 1 à 4, l'anneau de rétention 704 entoure le dispositif de crochet 706 sur une section se situant entre le crochet subsidiaire 708 et le crochet principal 707. Par contraste, dans le second mode de réalisation 700 illustré aux figures 7 à 11, l'anneau de rétention 704 entoure le dispositif de crochet 706 sur une section se situant entre le crochet subsidiaire 708 et le segment transversal fixé à la bande élastique 705 qui forme une boucle autour de ce segment.

Les figures 7, 8 et 9 illustrent le second mode de réalisation 700 du volet antichute dans un état moyennement tendu. Dans cet état, une modeste force de traction est exercée sur le dispositif de crochet 706 de sorte la bande élastique 705 est légèrement étirée et tendue.

Les figures 10 et 11 illustrent le second mode de réalisation 700 du volet antichute dans un état fortement tendu. Dans cet état, une force de traction importante est exercée sur le dispositif de crochet 706. de sorte la bande élastique 705 est fortement étirée et tendue.

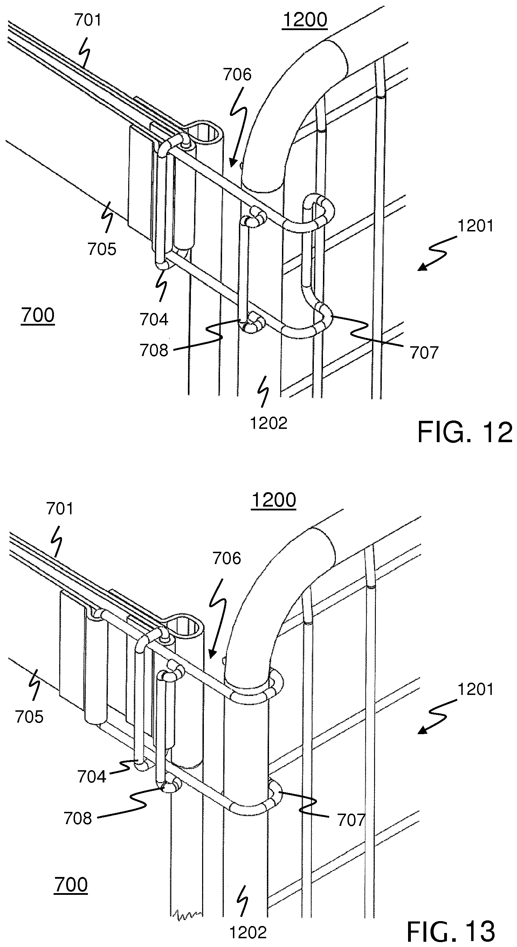

. Les figures 12 et 13 illustrent schématiquement une partie supérieure droite d'un roll conteneur 1200 comprenant un volet antichute conforme au second mode de réalisation 700. Les figures 12 et 13 présentent une vue schématique en perspective avant de la partie supérieure droite du roll conteneur 1200. Le roll conteneur 1200 comprend une ridelle 1201 ayant un montant 1202. La ridelle 1201 et le montant 1202 sont partiellement visibles aux figures 12 et 13.

La figure 12 illustre une situation dans laquelle le volet antichute est dans l'état fortement tendu, avant d'être accroché au montant 1202 de la ridelle 1201 du roll conteneur 1200. Pour arriver à cette situation, un opérateur peut avoir tiré sur le dispositif de crochet 706 jusqu'à ce que le crochet principal 707 dépasse le montant 1202, La bande élastique 705 s'étire et sera tendue. La feuille souple 701, qui constitue la partie principale du volet antichute, sera aussi tendue. Ensuite, l'opérateur positionne le crochet principal 707 en face du montant 1202 comme l'illustre la figure 12.

La figure 13 illustre une situation dans laquelle le volet antichute est dans l'état moyennement tendu. Pour arriver à cette situation, l'opérateur peut avoir lâché le dispositif de crochet 706. Le crochet principal 707 s'engage avec le montant 1202. Le volet antichute est maintenant accroché au montant 1202 de la ridelle 1201 du roll conteneur 1200 comme l'illustre la figure 13. La bande élastique 705 reste moyennement étirée et tendue. Une certaine force de tension est ainsi exercée sur la feuille souple 701.

Dans la situation illustrée à la figure 13, le volet antichute préserve une certaine élasticité. Le volet antichute peut prendre une forme légèrement bombée lorsque des marchandises placées dans le roll conteneur 1200 exercent une certaine poussée contre le volet antichute. Toutefois, ce bombage du volet antichute est limité par le crochet subsidiaire 708 venant en butée contre l'anneau de rétention 704. A ce point, le volet antichute ne se déforme plus et présente une rigidité empêchant une chute de marchandises.

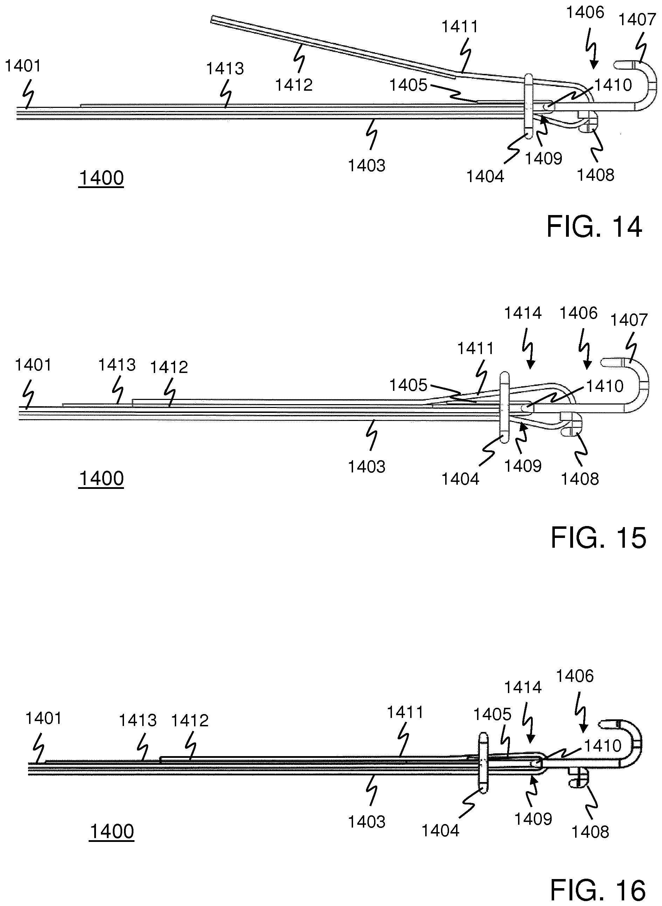

Les figures 14, 15 et 16 illustrent schématiquement un troisième mode de réalisation 1400 d'un volet antichute. Les figures 14, 15 et 16 présentent une vue schématique de dessus du troisième mode de réalisation 1400.

Le troisième mode de réalisation 1400 comprend une feuille souple 1401, une bande de renfort 1403, un anneau de rétention 1404, une bande élastique 1405, et un dispositif de crochet 1406 comprenant un crochet principal 1407 et un crochet subsidiaire 1408. La bande élastique 1405 et la bande de renfort 1403 sont fixées à la feuille souple 1401, par exemple, par couture. Un bout de la bande élastique 1405 forme une boucle 1409 qui dépasse la feuille souple 1401 Un segment transversal 1410 du dispositif de crochet 1406 est prise dans cette boucle 1409 qui fixe ainsi le dispositif de crochet 1406 à la bande élastique 1405.

La bande de renfort 1403 comprend un bout libre 1411, qui n'est pas fixée à demeure à la feuille souple 1401. Ce bout libre 1411 comprend une section 1412 munie d'éléments auto agrippant. La feuille souple 1401 comprend une section 1413 munie d'éléments auto agrippant complémentaires dans laquelle la section 1412 du bout libre 1411 de la bande de renfort 1403 qui est munie d'éléments auto agrippant peut s'engager. Ainsi, la bande de renfort 1403 peut former une boucle 1414 comme l'illustrent les figures 15 et 16. Cette boucle 1414 entoure la boucle 1409 formée par la bande élastique 1405. La boucle 1414 est ajustable en largeur : il suffit de déplacer la section 1412 munie d'éléments auto agrippant.de la bande de renfort 1403 par rapport à la feuille souple 1401.

La figure 14 illustre le volet antichute dans un état lâche et non bridé. Dans l'état lâche, aucune force de traction n'est exercée sur le dispositif de crochet 1406. Toutefois, lorsqu'une force de traction est exercée sur le dispositif de crochet 1406, celui-ci n'est pas bridé dans un mouvement vers la droite en s'éloignant de la feuille souple 1401. En principe, la boucle 1409 formée par la bande élastique 1405 peut s'étirer jusqu'à un point où la bande élastique 1405 casse.

La figure 15 illustre le volet antichute dans un état lâche et bridé. Dans l'état bridé, la bande de renfort 1403 forme la boucle 1414 comme mentionnée dans ce précède.

La figure 16 illustre le volet antichute dans un état tendu et bridé. La boucle 1414 formée par la bande de renfort 1403 constitue un arrêt contre lequel la bande élastique 1405 ainsi que le segment transversal 1410 du dispositif de crochet 1406 viennent en butée.

### NOTES

Les modes de réalisation décrits dans ce qui précède en référence aux dessins sont présentés à titre d'illustration. L'invention selon les revendications peut être mise en œuvre de nombreuses façons différentes. Afin d'illustrer cela, quelques alternatives sont indiquées sommairement.

L'invention peut être mise en œuvre dans de nombreux types de produits et procédés logistiques. L'invention peut mise en œuvre dans tout type de module logistique. Dans les modes de réalisations présentés, le module logistique est un roll conteneur. Dans d'autres modes de réalisations, le module logistique peut être, par exemple, un conteneur sans roulettes ou un chariot. De façon globale, le terme « module logistique » doit donc être interprété de façon large. Ce terme embrasse toute entité dans laquelle des objets peuvent être placés pour des opérations logistiques, notamment pour un transport de marchandises.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Volet antichute pour module logistique comprenant :
- une feuille souple (101),
- un dispositif de crochet (106),
- une bande élastique (105) par l'intermédiaire de laquelle le dispositif de crochet est relié à la feuille souple, et **caractérisé par**
- un élément d'arrêt (104) fixé sur la feuille souple, un élément du dispositif de crochet venant en butée contre l'élément d'arrêt lorsque la bande élastique est éti rée.

2. Volet antichute selon la revendication 1, dans lequel :
- l'élément d'arrêt fixé sur la feuille souple (101) est un anneau de rétention (104) entourant et retenant le dispositif de crochet (106), et
- le dispositif de crochet comprend un crochet principal (107) et un crochet subsidiaire (108), le crochet subsidiaire formant l'élément du dispositif de crochet venant en butée contre l'élément d'arrêt lorsque la bande élastique (105) est éti rée.

3. Volet antichute selon la revendication 2, dans lequel l'anneau de rétention (104) entoure le dispositif de crochet (106) sur une section se situant entre le crochet subsidiaire (108) et le crochet principal (107).

4. Volet antichute selon la revendication 2, dans lequel l'anneau de rétention (104) entoure le dispositif de crochet (106) sur une section se situant entre le crochet subsidiaire (108) et un segment transversale du dispositif de crochet par lequel le dispositif de crochet est fixé à la bande élastique (105).

5. Volet antichute selon l'une quelconque des revendications 2 à 4 comprenant une bande (103) fixée horizontalement sur la feuille souple (101), un bout de la bande formant une boucle de fixation au moyen de laquelle l'anneau de rétention est fixé au volet antichute.

6. Volet antichute selon la revendication 1, comprenant une bande (103) fixée horizontalement sur la feuille souple (101), un bout libre de la bande comprenant une section munie d'éléments auto agrippant, la feuille souple comprenant une section munie d'éléments auto agrippant complémentaires dans laquelle la section de la bande munie d'éléments auto agrippant est apte à s'engager de sorte que la bande forme une boucle, la boucle constituant l'élément d'arrêt sur la feuille souple, l'élément du dispositif de crochet (106), qui vient en butée contre cet élément d'arrêt, étant un segment transversale du dispositif de crochet.

7. Module logistique comprenant un volet antichute selon la revendication 1.

8. Module logistique comprenant un volet antichute selon l'une quelconque des revendications 2 à 5, dans lequel le crochet principal (107) est apte à s'engager avec un montant d'une ridelle du module logistique.

9. Module logistique selon la revendication 8, dans lequel le volet antichute est apte à pivoter autour d'un montant d'une autre ridelle du module logistique le crochet subsidiaire (108) étant apte à servir pour accrocher le volet antichute à l'autre ridelle pour maintenir le volet antichute plaqué contre l'autre ridelle.

## Patentansprüche

1. Sturzschutzklappe für ein Logistikmodul, umfassend:
- ein biegsames Blatt (101),
- eine Hakenvorrichtung (106),
- ein elastisches Band (105), mit dessen Hilfe die Hakenvorrichtung mit dem biegsamen Blatt verbunden wird, und **gekennzeichnet durch**
- ein Anschlagelement (104), das auf dem biegsamen Blatt befestigt ist, wobei ein Element der Hakenvorrichtung gegen das Anschlagelement anschlägt, wenn das elastische Band gestreckt ist.

2. Sturzschutzklappe nach Anspruch 1, wobei:
- das Anschlagelement, das auf dem biegsamen Blatt (101) befestigt ist, ein Rückhaltering (104) ist, der die Hakenvorrichtung (106) umgibt und zurückhält, und
- die Hakenvorrichtung einen Haupthaken (107) und einen Zusatzhaken (108) umfasst, wobei der Zusatzhaken das Element der Hakenvorrichtung bildet, das gegen das Anschlagelement anschlägt, wenn das elastische Band (105) gestreckt ist.

3. Sturzschutzklappe nach Anspruch 2, wobei der Rückhaltering (104) die Hakenvorrichtung (106) auf einem Abschnitt umgibt, der sich zwischen dem Zusatzhaken (108) und dem Haupthaken (107) befindet.

4. Sturzschutzklappe nach Anspruch 2, wobei der Rückhaltering (104) die Hakenvorrichtung (106) auf einem Abschnitt umgibt, der sich zwischen dem Zusatzhaken (108) und einem Quersegment der Hakenvorrichtung befindet, durch welches die Hakenvorrichtung an dem elastischen Band (105) befestigt ist.

5. Sturzschutzklappe nach einem der Ansprüche 2 bis 4, umfassend ein Band (103), das horizontal auf dem biegsamen Blatt (101) befestigt ist, wobei ein Ende des Bands eine Befestigungsschleife bildet, mittels derer der Rückhaltering an der Sturzschutzklappe befestigt ist.

6. Sturzschutzklappe nach Anspruch 1, umfassend ein Band (103), das horizontal auf dem biegsamen Blatt (101) befestigt ist, wobei ein freies Ende des Bands einen Abschnitt umfasst, der mit Klettverschlusselementen versehen ist, wobei das biegsame Blatt einen Abschnitt umfasst, der mit komplementären Klettverschlusselementen versehen ist, wobei der Abschnitt des Bands, der mit Klettverschlusselementen versehen ist, geeignet ist, so einzugreifen, dass das Band eine Schleife bildet, wobei die Schleife das Anschlagelement auf dem biegsamen Blatt bildet, wobei das Element der Hakenvorrichtung (106), das gegen dieses Anschlagelement anschlägt, ein Quersegment der Hakenvorrichtung ist.

7. Logistikmodul, umfassend eine Sturzschutzklappe nach Anspruch 1.

8. Logistikmodul, umfassend eine Sturzschutzklappe nach einem der Ansprüche 2 bis 5, wobei der Haupthaken (107) geeignet ist, in eine Stütze einer Seitenwand des Logistikmoduls einzugreifen.

9. Logistikmodul nach Anspruch 8, wobei die Sturzschutzklappe geeignet ist, um eine Stütze einer anderen Seitenwand des Logistikmoduls zu schwenken, wobei der Zusatzhaken (108) geeignet ist, zum Einhaken der Sturzschutzklappe an der anderen Seitenwand zu dienen, um die Sturzschutzklappe gegen die andere Seitenwand gedrückt zu halten.

## Claims

1. A fall-prevention flap for a logistics module comprising:
- a flexible sheet (101),
- a hook device (106),
- an elastic band (105) by means of which the hook device is connected to the flexible sheet, and **characterized by**
- a stop member (104) fastened to the flexible sheet, a member of the hook device abutting against the stop member when the elastic band is stretched.

2. The fall-prevention flap according to claim 1, wherein:
- the stop member fastened to the flexible sheet (101) is a retaining ring (104) surrounding and retaining the hook device (106), and
- the hook device comprises a main hook (107) and a subsidiary hook (108), the subsidiary hook forming the member of the hook device abutting against the stop member when the elastic band (105) is stretched.

3. The fall-prevention flap according to claim 2, wherein the retaining ring (104) surrounds the hook device (106) on a section located between the subsidiary hook (108) and the main hook (107).

4. The fall-prevention flap according to claim 2, wherein the retaining ring (104) surrounds the hook device (106) on a section located between the subsidiary hook (108) and a transverse segment of the hook device by which the hook device is fastened to the elastic band (105).

5. The fall-prevention flap according to any one of claims 2 to 4 comprising a band (103) horizontally fastened to the flexible sheet (101), one end of the band forming a fastening loop by means of which the retaining ring is fastened to the fall-prevention flap.

6. The fall-prevention flap according to claim 1, comprising a band (103) horizontally fastened to the flexible sheet (101), a free end of the band comprising a section provided with self-gripping elements, the flexible sheet comprising a section provided with complementary self-gripping elements wherein the section of the band provided with self-gripping elements is capable of engaging so that the band forms a loop, the loop constituting the stop member on the flexible sheet, the member of the hook device (106), which abuts against this stop member, being a transverse segment of the hook device.

7. A logistics module comprising a fall-prevention flap according to claim 1.

8. The logistics module comprising a fall-prevention flap according to any one of claims 2 to 5, wherein the main hook (107) is adapted to engage with an upright of a side wall of the logistics module.

9. The logistics module according to claim 8, wherein the fall-prevention flap is adapted to pivot around an upright of another side wall of the logistics module, the subsidiary hook (108) being usable to hook the fall-prevention flap to the other side wall to keep the fall-prevention flap pressed against the other side wall.
